## Europäisches Patentamt
## European Patent Office
## Office européen des brevets

(19)

(11) Veröffentlichungsnummer: **0 012 251**
**B1**

(12) # EUROPÄISCHE PATENTSCHRIFT

(45) Veröffentlichungstag der Patentschrift:
26.08.81

(51) Int. Cl.³: **B 60 S 1/38**

(21) Anmeldenummer: **79104625.3**

(22) Anmeldetag: **21.11.79**

(54) **Wischvorrichtung für Scheiben von Kraftfahrzeugen.**

(30) Priorität: **12.12.78 DE 2853487**

(43) Veröffentlichungstag der Anmeldung:
**25.06.80 Patentblatt 80/13**

(45) Bekanntmachung des Hinweises auf die Patenterteilung:
**26.08.81 Patentblatt 81/34**

(84) Benannte Vertragsstaaten:
**BE DE FR GB IT**

(56) Entgegenhaltungen:
**FR-A-1 527 399**
**FR-A-2 198 441**

(73) Patentinhaber: **ROBERT BOSCH GMBH, Postfach 50, D-7000 Stuttgart 1 (DE)**

(72) Erfinder: **Zehender, Ernst, Dr., Gartenstrasse 78, D-7261 Althengstett-Ottenborn (DE)**
Erfinder: **Bonn, Heinz, Innsbrucker Strasse 45, D-7000 Stuttgart 61 (DE)**
Erfinder: **Zorn, Günther, Fasanenstrasse 3, D-7580 Bühl (DE)**
Erfinder: **Schaller, Gotthilf, Adolf-Kolping-Weg 12, D-7250 Leonberg (DE)**

ACTORUM AG.

Wischvorrichtung für Scheiben von Kraftfahrzeugen

Stand der Technik

Die Erfindung geht aus von einer Wischvorrichtung nach der Gattung des Hauptanspruchs. Es ist schon eine Wischvorrichtung bekannt (FR-A 1527 399), bei der die Wischleiste quer zu ihrer Erstreckung Spiel in den Krallen des Wischblattgestells hat. Die Wischleiste wird im Betrieb der Wischvorrichtung quer zu ihrer Längserstreckung verschoben, wobei eine auf der Scheibe aufliegende Wischlippe der Wischleiste über einen sogenannten Kippsteg mit dem Leistenkörper verbunden ist. In den Umkehrstellungen des Wischblatts wird die Wischlippe so umgelegt, dass sie von dem Wischblattgestell geschleppt wird. Eine genaue Analyse des Umlegvorganges hat gezeigt, dass das Umlegen der Wischleiste genau im Umkehrpunkt erfolgen muss, weil eine nach der Richtungsumkehr zunächst geschobene Lippe nur ganz unsicher und unter Rattererscheinungen zum Umlegen kommt. Diese Rattererscheinungen wirken sich nachteilig auf die Wischqualität aus. Weiter hat sich gezeigt, dass sich eine geschobene Wischlippe von ihrem nahe dem Wischarm befindlichen Ende aus allmählich umlegt. Dagegen erfolgt das korrekte Umlegen der Wischleiste, das direkt in der Bewegungsumkehrstellung des Wischblatts erfolgen soll, stets von dem Ende der Wischleiste aus, welches vom Wischarm entfernt ist. Ursache für dieses Verhalten der Wischleiste beim Umlegen ist die Tatsache, dass die Reibung der Wischlippe auf der Scheibe beim Stillstand am grössten ist. Mit zunehmender Geschwindigkeit der Wischlippe auf der Scheibe wird die vom Antrieb zu überwindende Reibung jedoch kleiner. Diese Reibung ist die für das selbsttätige Umlegen des Wischblatts wesentliche Kraft. Wenn also das vom Wischarm entfernte Ende der Wischlippe umgelegt wird solange sie selbst gegenüber der Scheibe noch in Ruhe ist, muss nach dem Beginn der Wischbewegung in Gegenrichtung die gesamte Lippe umlegen, weil beim hin- und hergehend angetriebenen Wischblatt die dem Antriebdrehpunkt benachbarten Bereiche des Wischblatts langsamer sind als die diesem Punkt entfernteren Bereiche des Wischblatts und deshalb einer höheren Reibung unterliegen als das vom Wischarm entfernte, bereits umgelegte Ende der Wischlippe. Die besten Voraussetzungen für ein einwandfreies Umlegen der gesamten Wischlippe liegen deshalb dann vor, wenn man Massnahmen trifft, welche für ein Umlegen des vom Wischarm entfernt liegenden Endes der Wischlippe genau im Umkehrpunkt des Wischblatts sorgt. Dabei müssen auch die durch die Fertigungstoleranzen gegebenen Spiele zwischen Wischblattgestell und Wischgummi in die der neuen Bewegungsrichtung adäquaten Richtung verändert werden. Dies erfolgt in den nicht zu grossen und leichtgängigen Spielen in den Bügelgelenken schnell und ohne dass die Wischlippe bereits aus ihrer Ruhelage am Umkehrpunkt bewegt wird. Diese Aussage gilt aber nicht für das schwergängige Spiel zwischen den Haltekrallen und der Wischleiste, welches nur nach und nach verschoben wird und dadurch das Umlegen der Wischlippe im Umkehrpunkt des Wischblatts nachteilig beeinflusst. Es soll also das für das Umlegen im Umkehrpunkt schädliche, schwer zu verschiebende Spiel zwischen den Haltekrallen und der Wischleiste im Bereich des vom Wischarm entfernt liegenden Wischleistenendes eliminiert werden. Bei der bekannten Wischvorrichtung ist zwar vorgesehen, dass Haltekrallen Federschienen an Wandabschnitte der Wischleiste andrücken damit ein Klappen dieser Teile im Betrieb der Wischvorrichtung zu vermeiden ist, doch liegt die angestrebte Halterichtung nicht in der Wischrichtung. Im übrigen muss aber auch ein Verschieben der Wischleiste aus Gründen der Anpassung an gekrümmte Scheiben gewährleistet bleiben. Rein theoretisch könnte zwar mit einem erheblichen Fertigungsaufwand eine Passung zwischen den Haltekrallen und den mit diesen zusammenwirkenden Bereichen der Wischleiste hergestellt werden welche beiden Gesichtspunkten gerecht würde, doch in der Praxis würde sich sofort zeigen, dass ein spielloser Schiebesitz zwischen den Gleitpartnern Metall-Gummi oder Kunststoff-Gummi ein unbefriedigendes Ergebnis hinsichtlich der Wischleistenpassung an die Scheibenkrümmung ergäbe. Auch wäre ein solcher Schiebesitz keine feste Halterung im Sinne der vorliegenden Erfindung.

Vorteile der Erfindung

Die erfindungsgemässe Wischvorrichtung mit den kennzeichnenden Merkmalen des Hauptanspruchs hat demgegenüber den Vorteil, dass an den von dem Wischarm entfernten Ende des Wischblatts kein Spiel mehr zwischen der Wischleiste und den Haltekrallen des Wischblattgestells vorhanden ist, so dass der Beginn der Rücklaufbewegung des Wischarms vollständig zum Umlegen des betreffenden Wischlippenendes umgesetzt wird.

Durch die in den Unteransprüchen aufgeführten Massnahmen sind vorteilhafte Weiterbildungen und Verbesserungen der im Hauptanspruch angegebenen Wischvorrichtung möglich.

Zeichnung

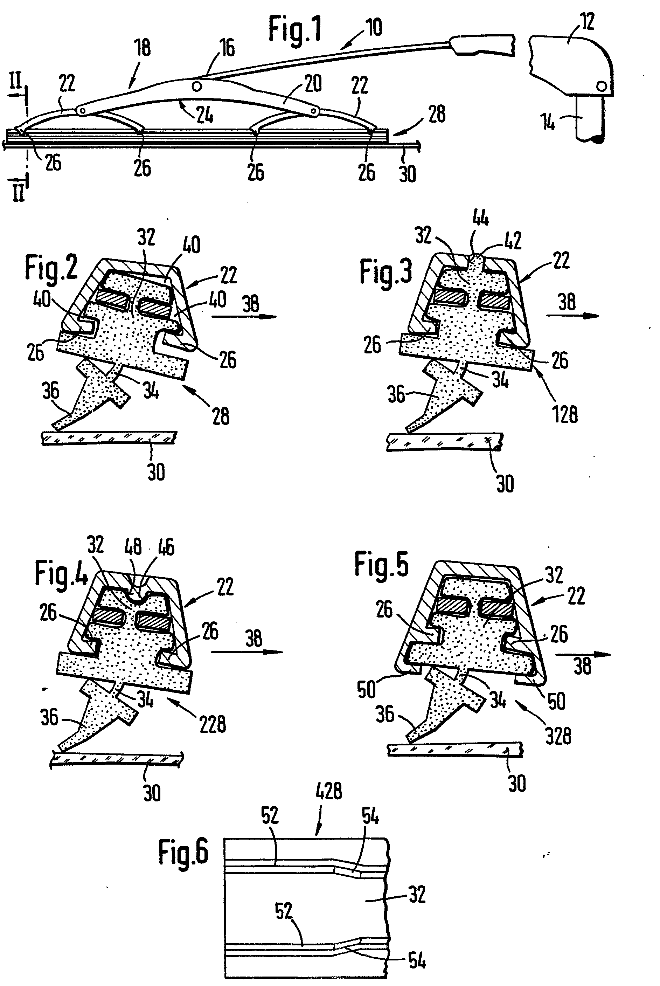

Ausführungsbeispiele der Erfindung sind in der Zeichnung dargestellt und in der nachfolgenden Beschreibung näher erläutert. Es zeigen Figur 1 einen mit einem Wischblatt versehenen Wischarm in Seitenansicht, Figur 2 einen Schnitt entlang der Linie II-II in Figur 1 durch ein Wischblatt gemäss dem Stand der Technik in vergrösserter Darstellung, Figur 3 einen Schnitt entlang der Linie II-II in Figur 1 durch ein Wischblatt nach der Erfindung, in vergrösserter Darstellung, Figur 4 einen Schnitt gemäss Figur 3 durch eine andere Ausführung der Erfindung, Figur 5 einen Schnitt gemäss Figur 3 durch eine weitere Ausführung der Erfindung und Figur 6 eine Draufsicht auf eine von einem Wischblattgestell gehaltenes Ende einer Wischleiste, gemäss einer weiteren Ausführung der Erfindung, in vergrösserter Darstellung.

Beschreibung der Erfindung

Zu einer nicht näher dargestellten Wischvorrichtung für die Scheiben eines Kraftfahrzeuges gehören ein hin- und hergehend angetriebener Wischarm 10, dessen eines Ende 12 mit einer pendelnd angetriebenen Wischerwelle 14 verbunden ist. An dem anderen, freien Ende 16 des Wischarms 10 ist ein Wischblatt 18 gelenkig befestigt. Das Wischblatt 18 weist ein aus einem Hauptbügel 20 und zwei jeweils an einem Ende des Hauptbügels 20 angelenkten Krallenbügel 22 stehendes Wischblattgestell 24 auf. Krallen 26 der Krallenbügel 22 halten eine aus einem gummielastischen Material gefertigte Wischleiste 28, die im Betrieb der Wischvorrichtung auf einer von dieser zu reinigenden Scheibe 30 liegt. Die Anordnung des Wischblatts 18 an dem Wischarm 10 ist so getroffen, dass sich beide Teile der Wischvorrichtung im wesentlichen in der selben Richtung erstrecken (Figur 1).

Wie aus den Figuren 2 bis 5 ersichtlich ist, weist die Wischleiste 28, 128, 228, 328 einen Wischleistenkörper 32 auf, welcher von den Krallen 26 der Krallenbügel 22 gefasst ist. An seiner der zu wischenden Scheibe 30 zugewandten Seite ist der Wischleistenkörper 32 mit einem sogenannten Kippsteg 34 versehen, an den sich in Richtung auf die Scheibe 30 eine sogenannte Wischlippe 36 anschliesst. Der Kippsteg 34 soll im Betrieb der Wischvorrichtung ein selbsttätiges Umkippen der Wischlippe 36 bewirken, wenn sich die Pendelbewegung des Wischarms 10 bzw. des Wischblatts 18 umkehrt. Die Wischlippe 36 soll sich zum Wischen also bei einer Bewegung des Wischblatts 18 in Richtung des Pfeiles 38 (siehe Figur 2 bis 5) in den jeweils dargestellten Lagen befinden. Die Wischlippe 36 soll geschleppt und nicht geschoben werden. Wie weiter aus der den Stand der Technik dokumentierenden Figur 2 ersichtlich ist, hat der Wischleistenkörper 32 in den Krallen 26 der Krallenbügel 22 Spiel, so dass bei jeder Umsteuerbewegung des Wischblatts neben der Kippbewegung der Wischlippe 36 auch eine Kippbewegung des Wischleistenkörpers 32 in den Krallen 26 erfolgt. Zum besseren Verständnis sind die Spielstellen beim Wischblatt gemäss dem Stand der Technik mit dem Bezugszeichen 40 versehen worden.

Um diesem Spiel entgegenzuwirken, ist bei einer ersten Ausführung der Erfindung der von dem Kippsteg 34 abgewandte Rücken des Wischleistenkörpers 32 mit einem Vorsprung 42 versehen, der passend und spiellos in eine Ausnehmung 44 des Krallenbügels 22 greift.

Bei einer zweiten, in Figur 4 dargestellten Ausführung ist der im Querschnitt U-förmige Krallenbügel 22 in seinem Stegabschnitt mit einer gegen den Wischleistenkörper 22 hin durchgedrückten Nase 46 versehen, der eine Aussparung 48 im Rücken des Wischleistenkörpers 32 zugeordnet ist. Die Nase sitzt passend und spiellos in der Aussparung 48 des Wischleistenkörpers 32.

Bei einer dritten, in Figur 5 dargestellten Ausführung weist der Krallenbügel 22 neben den Haltekrallen 26 noch zwei Klemmkrallen 50 auf, welche den Wischleistenkörper 32 an seiner mit dem Kippsteg 34 versehenen Unterseite fassen und spiellos festhalten.

Bei einer weiteren, in Figur 6 dargestellten Ausführung der Erfindung entspricht der Krallenbügel völlig dem Krallenbügel 22 gemäss Figur 2. Das in Figur 6 gezeigte Ende der Wischleiste 28 ist jedoch im Bereich des Wischleistenkörpers 32 mit einer Verdickung 52 versehen, welche von den Krallen 26 des Krallenbügels 22 gefasst wird. Dabei ist die Dimensionierung der Verdickung 52 so ausgelegt, dass zur Montage der Wischleiste 28 in den Krallenbügeln 26 die Verdickung 52 zusammengedrückt werden muss, wenn sie von den Krallen 26 übergriffen und gefasst werden soll. Dadurch wird die Verbindung zwischen der Wischleiste 428 gemäss Figur 6 im Bereich der Verdickung 52 spiellos. Zwecks einer einfacheren Montage ist zwischen der Wischleiste 32 und der selbstverständlich zur Wischleiste gehörenden Verdickung 52 ein Übergang 54 vorhanden.

Es ist also ersichtlich, dass jede Wischleiste 128, 228, 328 und 428 durch besondere Mittel 42, 44 bzw. 46, 48 bzw. 50 bzw. 52 spiellos mit dem Wischblattgestell 24 verbunden sind. Es ist aber auch denkbar, dass mehrere der Ausführungen gemäss den Figuren 3 bis 6 gleichzeitig an einem Wischblatt ausgeübt sein können.

Wegen der gewölbten Windschutzscheiben und der dadurch erforderlichen ständigen Anpassung der Wischleiste an die Scheibenkrümmung kann diese spiellose Halterung zwischen Wischblattgestell 24 und den Wischleisten 128 bzw. 228 bzw. 328 bzw. 428 nur an einem Angriffspunkt der Krallen 26 erfolgen. Wie eingangs erläutert worden ist, ist diese spiellose Verbindung vorzugsweise im Bereich des Wischleistenendes vorgenommen, welches am weitesten von dem Wischarm 10 bzw. von dem Antriebsorgan 14 für den Wischarm 10 entfernt ist.

**Patentansprüche**

1. Wischvorrichtung für Scheiben von Kraftfahrzeugen, mit einem hin- und hergehend angetriebenen Wischarm (10) und einem an diesem angelenkten, im wesentlichen in Erstreckungsrichtung des Wischarms angeordneten, langgestreckten Wischblatt (18), das eine auf der zu wischenden Scheibe (30) aus einem gummielastischen Material bestehende, von dem Wischarm geschleppte Wischleiste (128 bzw. 228 bzw. 328 bzw. 428) aufweist, welche in jeder Umkehrstellung des Wischblatts selbsttätig in ihrer Schleppposition kippt und die von dem Wischblattgestell (24) mit einem die ständige Anpassung der Wischleiste an eine Scheibenkrümmung zulassenden Spiel gehalten ist, dadurch gekennzeichnet, dass die Halterung zwischen Wischleiste (128 bzw. 228 bzw. 328 bzw. 428) und Wischblattgestell (24) an einer Stelle, vorzugsweise im Bereich ihres von dem Wischarm (10) entfernten Endes, eine spielfreie Verbindung (42, 44 bzw. 46, 48 bzw. 50 bzw. 52) bildet, die beim Umkippen der Wischleiste in ihre Schleppstellung eine Verlagerung der Wischleiste im Wischblattgestell (24) quer zu ihrer Längserstreckung eliminiert.

2. Wischvorrichtung nach Anspruch 1, bei der die Wischleiste von in Erstreckung des Wischblatts hintereinander angeordneten Krallen gehalten ist, dadurch gekennzeichnet, dass die Wischleiste (128) von einer Haltekralle (26) spiellos gehalten ist.

3. Wischvorrichtung nach einem der Ansprüche 1 oder 2, dadurch gekennzeichnet, dass das Wischblattgestell (24) ausser den Haltekrallen (26) wenigstens eine mit der Wischleiste (328) zusammenwirkende Klemmkralle (50) aufweist.

4. Wischvorrichtung nach Anspruch 1, dadurch gekennzeichnet, dass die Wischleiste (128) wenigstens einen Vorsprung (42) hat, der spiellos in eine Ausnehmung (44) des Wischblattgestells (24) greift.

5. Wischvorrichtung nach Anspruch 1, dadurch gekennzeichnet, dass das Wischblattgestell (24) wenigstens mit einer Nase (46) in eine Aussparung (48) der Wischleiste (228) greift.

6. Wischvorrichtung nach einem der Ansprüche 1 bis 3, dadurch gekennzeichnet, dass die Wischleiste (428) an ihren von dem Wischarm (10) entfernten Ende, insbesondere an ihrem mit der Haltekralle (26) bzw. der Klemmkralle (50) zusammenwirkenden Bereich mit einer Verdickung (52) versehen ist.

7. Wischvorrichtung nach Anspruch 6, dadurch gekennzeichnet, dass zwischen der Wischleiste (428) und der Verdickung (52) der Wischleiste (28) ein Übergang (54) angeordnet ist.

8. Wischvorrichtung nach einem der Ansprüche 1 bis 7, dadurch gekennzeichnet, dass die Wischleiste (128 bzw. 228 bzw. 328 bzw. 428) einen Wischleistenkörper (32) und eine Wischlippe (36) aufweist, die durch einen Kippsteg (34) miteinander verbunden sind.

**Revendications**

1. Dispositif d'essuyage pour glaces de véhicules automobiles, avec un bras d'essuyage (10) entraîné en allant en avant et en arrière et un balai d'essuyage (18) allongé articulé sur lui, disposé sensiblement dans la direction d'extension du bras d'essuyage, comportant une lame de balayage (128, 228, 328, 428) en matière à élasticité de caoutchouc traînée par le bras de balayage sur la glace (30) à essuyer, lame qui bascule automatiquement dans sa position de trainage dans chaque position de rebroussement du balai d'essuyage et qui est maintenue par la carcasse de balai (24) avec un jeu permettant l'ajustement constant de la lame d'essuyage à une courbure de glace, caractérisé en ce que le maintien entre la lame d'essuyage (128, 228, 328, 428) et la carcasse de balai (24) forme un assemblage sans jeu (42, 44; 46, 48; 50, 52) en un emplacement, de préférence dans la domaine de son extrémité éloignée du bras d'essuyage (10), assemblage qui lors du basculement de la lame d'essuyage dans sa position de trainage élimine un déplacement de la lame d'essuyage dans la carcasse de balai (24) perpendiculairement à sa dimension longitudinale.

2. Dispositif d'essuyage selon la revendication 1, dans lequel la lame d'essuyage est maintenue par des griffes disposées l'une derrière l'autre dans l'étendue du balai, caractérisé en ce que la lame d'essuyage (128) est maintenue sans jeu par une griffe de maintien (26).

3. Dispositif d'essuyage selon l'une des revendications 1 ou 2, caractérisé en ce que la carcasse de balai (24), comporte, outre les griffes de maintien (26), au moins une griffe de blocage (50) coopérant avec la lame d'essuyage (328).

4. Dispositif d'essuyage selon revendication 1, caractérisé en ce que la lame d'essuyage (128) comporte au moins une saillie (42) s'engageant sans jeu dans un évidement (44) de la carcasse de balai (24).

5. Dispositif d'essuyage selon revendication 1, caractérisé en ce que la carcasse de balai (24) vient en prise par au moins un téton (46) dans un évidement (48) de la lame d'essuyage (28).

6. Dispositif d'essuyage selon l'une des revendications 1 à 3, caractérisé en ce que la lame de balayage (428) est prévue avec un épaississement (52) à son extrémité éloigné du bras d'essuyage (10), notamment dans sa zone coopérant avec la griffe de maintien (26) ou la griffe de blocage (50).

7. Dispositif d'essuyage selon la revendication 6, caractérisé en ce qu'une transition (654) est disposée entre la lame d'essuyage (428) et l'épaississement (52) de la lame d'essuyage (428).

8. Dispositif d'essuyage selon l'une des revendications 1 à 7, caractérisé en ce que la lame d'essuyage (128; 228; 328; 428) comporte un corps (32) de lame d'essuyage et une lèvre d'essuyage (36) reliés entre eux par un voile de basculement (34).

**Claims**

1. A wiper device for vehicle screens, comprising a wiper arm (10) driven to-and-fro and an elongate wiper blade (18) hinged to the wiper arm and arranged substantially in the direction in which the wiper arm extends, the wiper blade having a wiper strip (128 or 228 or 328 or 428) on the screen (30) to be wiped, consisting of a rubber elastic material and trailed by the wiper arm, in which, in each position of reversal, the wiper strip tilts automatically into its trailing position and is retained by the wiper blade frame (24) with a clearance permitting permanent matching of the wiper strip to a screen curvature, characterised in that, the mounting between the wiper strip (128 or 228 or 328 or 428) and the wiper blade frame (24) forms a clearance-free connection (42, 44 or 46, 48 or 50 or 52) at one location, preferably in the region of its end remote from the wiper arm (10), which connection eliminates a displacement of the wiper strip in the wiper blade frame (24), transversely with respect to its longitudinal extent, during tilting into its trailing position.

2. A wiper device according to claim 1, in which the wiper strip is held by claws arranged in succession along the wiper blade, characterised in that, the wiper strip (128) is held without clearance by a retaining claw (26).

3. A wiper device according to one of claims 1 or 2, characterised in that, besides the retaining claws (26), the wiper blade frame (24) has at least one clamping claw (50) co-operating with the wiper strip (328).

4. A wiper device according to claim 1, characterised in that, the wiper strip (128) has at least one projection (42) which engages without clearance in a recess (44) in the wiper blade frame (24).

5. A wiper device according to claim 1, characterised in that, the wiper blade frame (24) engages in a recess (48) in the wiper strip (228) at least weith one lug (46).

6. A wiper device according to one of claims 1 to 3, characterised in that, at its end remote from the wiper arm (10), especially in its region co-operating with the retaining claw (26) or the clamping claw (50), the wiper strip (428) is provided with a thickened portion (52).

7. A wiper device according to claim 6, characterised in that, a transition 654) is arranged between the wiper strip (428) and the thickened portion (52) of the wiper strip (428).

8. A wiper device according to one of clims 1 to 7, characterised in that, the wiper strip (128 or 228 or 328 or 428) has a wiper strip element (32) and a wiper lip (36) which are connected to one another by a tilt web (34).

Fig.1

Fig.2

Fig.3

Fig.4

Fig.5

Fig.6